# EUROPÄISCHE PATENTSCHRIFT

(11) **EP 2 122 137 B1**
(45) Veröffentlichungstag und Bekanntmachung des Hinweises auf die Patenterteilung: **18.08.2010**
(21) Anmeldenummer: 08716999.1
(22) Anmeldetag: 21.02.2008
(51) Int. Cl.: F02B 27/00

(54) **BRENNKRAFTMASCHINENSYSTEM**
INTERNAL COMBUSTION ENGINE SYSTEM
SYSTÈME DE MOTEUR À COMBUSTION INTERNE

(30) Priorität: 23.02.2007 DE 102007009353
(43) Veröffentlichungstag der Anmeldung: 25.11.2009
(73) Patentinhaber: MAHLE International GmbH, 70376 Stuttgart (DE)
(72) Erfinder: ELSÄSSER, Alfred, 75210 Keltern (DE); LOCH, Adam, 70378 Stuttgart (DE); LERCH, Boris, 71735 Eberdingen-hochdorf (DE)
(74) Vertreter: BRP Renaud & Partner
(86) Internationale Anmeldenummer: PCT/EP2008/052097
(87) Internationale Veröffentlichungsnummer: WO 2008/101977

(56) Entgegenhaltungen:
- EP-A- 0 223 378
- GB-A- 2 301 147
- JP-A- 6 081 720
- US-A- 5 181 491

## Beschreibung

Die vorliegende Erfindung betrifft ein Brennkraftmaschinensystem, insbesondere in einem Kraftfahrzeug.

Ein derartiges Brennkraftmaschinensystem umfasst üblicherweise eine Brennkraftmaschine, zum Beispiel einen Dieselmotor oder einen Benzinmotor, eine Frischgasanlage zum Zuführen von Frischgas zur Brennkraftmaschine sowie eine Abgasanlage zum Abführen von Abgas von der Brennkraftmaschine. Zur Reduzierung der Schadstoffemissionen ist es üblich, eine Abgasrückführanlage vorzusehen, mit der Abgas aus der Abgasanlage entnehmbar und in die Frischgasanlage einleitbar ist. Um das rückzuführende Abgas von der Abgasanlage zur Frischgasanlage antreiben zu können, ist ein entsprechendes Druckgefälle erforderlich. Bei bestimmten Betriebszuständen der Brennkraftmaschine und insbesondere bei einer aufgeladenen Brennkraftmaschine ist die Druckdifferenz zwischen Abgasanlage und Frischgasanlage vergleichsweise klein, so dass es problematisch sein kann, die jeweils erwünschte Abgasrückführmenge zu realisieren.

EP 0 223 378 A und GB 2 301 147 A offenbaren eine Brennkraftmaschine gemäß des Oberbegriff des Anspruchs 1.

Aus der US 5 803 027 A ist eine Vorrichtung für EGR Steuerung bekannt, wobei eine Ventilsteuerung zur Betätigung des Frischgasventils vorgesehen ist, die so ausgestaltet ist, dass sie im Betrieb der Brennkraftmaschine zum Einstellen einer vom aktuellen Betriebszustand der Brennkraftmaschine abhängigen Abgasrückführmenge des Frischgasventils zur Erzeugung von Druckschwingungen in der Frischgasanlage ansteuert, die hinsichtlich Frequenz und/oder Amplitude von der einzustellenden Abgasrückführmenge abhängen.

Die vorliegende Erfindung beschäftigt sich mit dem Problem, für ein Brennkraftmaschinensystem der eingangs genannten Art eine verbesserte Ausführungsform anzugeben, die sich insbesondere durch eine Verbesserung der Abgasrückführung auszeichnet, und zwar vorzugsweise bei Brennkraftmaschinen mit vergleichsweise großen Volumenströmen.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, in der Frischgasanlage zumindest zwei parallel vom Frischgas durchströmbare Frischgaspfade auszubilden, die jeweils mit einem eigenen Frischgasventil steuerbar sind. Mit Hilfe derartiger Frischgasventile lässt sich der durchströmbare Querschnitt der Frischgasanlage gezielt variieren, was im Betrieb der Brennkraftmaschine z.B. dazu nutzbar ist, stromab der Frischgasventile einen Druckabfall zu erzeugen. Diese Druckreduzierung vergrößert die Druckdifferenz zwischen Abgasanlage und Frischgasanlage, was die Rückführung von Abgas verbessert. Von besonderer Bedeutung ist hierbei, dass zumindest zwei parallele Frischgaspfade vorgesehen sind, die jeweils mit einem eigenen Frischgasventil steuerbar sind. Der mit Hilfe des jeweiligen Frischgasventils zu steuernde Querschnitt kann dadurch vergleichsweise gering gewählt werden. Dies kann die Realisierung des jeweiligen Frischgasventils erheblich vereinfachen. Beispielsweise kann ein kleineres Ventilglied verwendet werden, das kleinere Trägheitsmomente besitzt. Gleichzeitig vereinfacht sich ein entsprechender Antrieb für das Ventilglied; ebenso reduziert sich der auftretende Verschleiß, während sich die Abdichtung des Ventilglieds innerhalb des jeweiligen Frischgaspfads vereinfacht. Durch diese Bauweise ist es somit insbesondere möglich, bei großvolumigen Brennkraftmaschinen, die einen vergleichsweise großen Volumenstrom an Frischgas benötigen, die Abgasrückführung mit Hilfe von Frischgasventilen in der Frischgasleitung zu steuern, wobei die hierzu erforderlichen Frischgasventile vergleichsweise preiswert realisierbar sind. Größere Brennkraftmaschinen kommen beispielsweise bei Nutzfahrzeugen zur Anwendung.

Die Erfindung sieht ferner eine Ventilsteuerung vor, welche die Frischgasventile in Abhängigkeit des aktuellen Betriebszustands der Brennkraftmaschine betätigt, um eine jeweils geeignete Abgasrückführmenge oder Abgasrückführrate einzustellen. Dabei kann diese Ventilsteuerung vorzugsweise so ausgestaltet sein, dass sie bei kleiner Last und/oder bei kleiner Drehzahl das eine Frischgasventil permanent in dessen Schließstellung verstellt hält und das andere Frischgasventil zum Einstellen der jeweiligen Abgasrückführmenge ansteuert. Bei mittlerer Last und/oder bei mittlerer Drehzahl kann vorgesehen sein, dass die Ventilsteuerung beide Frischgasventile zum Einstellen der jeweiligen Abgasrückführmenge synchron oder asynchron ansteuert. Ferner kann vorgesehen sein, dass die Ventilsteuerung bei großer Last und/oder bei großer Drehzahl das eine Frischgasventil permanent in dessen Offenstellung verstellt hält und das andere Frischgasventil zum Einstellen der jeweiligen Abgasrückführmenge ansteuert. Durch die Möglichkeit, die wenigstens zwei Frischgasventile unabhängig voneinander ansteuern zu können, lässt sich die Abgasrückführmenge besser beziehungsweise genauer an den aktuellen Bedarf anpassen, was sich auf die Abgaswerte des Brennkraftmaschinensystems positiv auswirkt.

Bei einer weiteren wichtigen Ausführungsform kann vorgesehen sein, dass die Abgasrückführanlage über wenigstens zwei verschiedene Einleitstellen an die Frischgasanlage angeschlossen ist, wobei diese Einleitstellen dann so positioniert sind, dass Druckschwingungen, die mit dem einen Frischgasventil erzeugbar sind, durch die eine Einleitstelle eine größere Abgasrückführmenge erzeugen als durch die andere Einleitstelle, während Druckschwingungen, die mit dem anderen Frischgasventil erzeugbar sind, durch die andere Einleitstelle eine größere Abgasrückführmenge erzeugen als durch die eine Einleitstelle. Bei dieser Bauweise ergeben sich zusätzliche Möglichkeiten zur Variierung der Abgasrückführmenge. Insbesondere kann gemäß einer Ausführungsform vorgesehen sein, dass zum Einstellen kleiner Abgasrückführmengen das eine Frischgasventil zum Erzeugen von Druckschwingungen angesteuert wird, während das andere Frischgasventil permanent in der Schließstellung oder in der Offenstellung oder in einer anderen Stellung verstellt gehalten wird. Zur Realisierung von mittleren Abgasrückführmengen kann das eine Frischgasventil permanent in der Schließstellung oder in der Offenstellung oder in einer anderen Stellung verstellt gehalten werden, während das andere Frischgasventil zum Erzeugen von Druckschwingungen angesteuert wird. Zur Realisierung größerer Abgasrückführmengen kann dann vorgesehen sein, dass beide Frischgasventile synchron zum Erzeugen von Druckschwingungen angesteuert werden. Bei dieser besonderen Betriebsweise lassen sich die unterschiedlichen Positionierungen der Einleitstellen gezielt dazu nutzen, durch Ansteuerung der verschiedenen Frischgasventile unterschiedliche Abgasrückführmengen zu erzeugen. Bemerkenswert ist dabei, dass die Einstellung unterschiedlicher Abgasrückführmengen vergleichsweise preiswert realisierbar ist, da die hierfür benötigte Hardware, nämlich zumindest eine weitere Einleitstelle vergleichsweise preiswert ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzip- darstellung eines Brennkraftmaschinensystems,
- Fig. 2: ein vergrößertes Detail II aus Fig. 1.

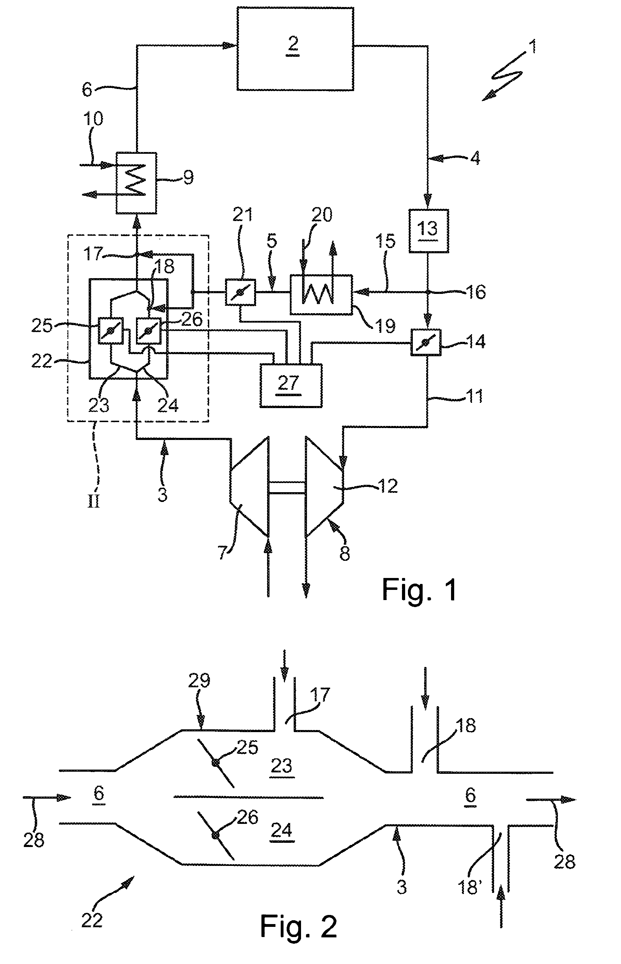

Entsprechend Fig. 1 umfasst ein Brennkraftmaschinensystem 1, das vorzugsweise in einem Kraftfahrzeug angeordnet ist, eine Brennkraftmaschine 2, eine Frischgasanlage 3, eine Abgasanlage 4 sowie eine Abgasrückführanlage 5. Bei der Brennkraftmaschine 2 handelt es sich um einen üblichen Verbrennungsmotor, wie zum Beispiel ein Dieselmotor, ein Benzinmotor oder ein Erdgasmotor, der im Betrieb einen Kraftstoff mit Frischgas, insbesondere Luft, verbrennt und dabei Abgas erzeugt.

Die Frischgasanlage 3 dient zum Zuführen von Frischgas zur Brennkraftmaschine 2. Hierzu weist die Frischgasanlage 3 eine Frischgasleitung 6 auf, die in üblicher Weise über einen hier nicht näher dargestellten, eingangsseitig an der Brennkraftmaschine 2 angeordneten Frischgasverteiler an die Brennkraftmaschine 2 angeschlossen ist. Sofern es sich, wie hier, um eine aufgeladene Brennkraftmaschine 2 handelt, ist in der Frischgasanlage 3 eine Ladeeinrichtung 7 angeordnet, um im Frischgas eine Druckerhöhung zu erzielen. Dabei kann es sich bei dieser Ladeeinrichtung 7 vorzugsweise um einen Verdichter 7 eines Abgasturboladers 8 handeln, oder aber um eine beliebige andere Ladeeinrichtung 7. Sofern eine derartige Ladeeinrichtung 7 vorgesehen ist, kann zusätzlich stromab davon ein Wärmeübertrager 9 in die Frischgasanlage 3 eingebunden sein, der zum Kühlen des aufgeladenen Frischgases dient und üblicherweise als Ladeluftkühler bezeichnet wird. Der Wärmeübertrager 9 kann hierbei in einen Kühlkreis 10 eingebunden sein, bei dem es sich zweckmäßig um den Kühlkreis der Brennkraftmaschine 2 handeln kann.

Die Abgasanlage 4 dient zum Abführen von Abgas von der Brennkraftmaschine 2 und weist hierzu eine Abgasleitung 11 auf, die in üblicher Weise über einen hier nicht näher dargestellten, ausgangsseitig an der Brennkraftmaschine 2 angeordneten Abgassammler an die Brennkraftmaschine 2 angeschlossen ist. Im vorliegenden Fall enthält die Abgasanlage 4 eine Turbine 12 des Abgasturboladers 8 zum Antreiben des Verdichters 7. Optional kann die Abgasanlage 4 zumindest eine Komponente 13 zum Behandeln von Abgas enthalten. Bei dieser Komponente 13 kann es sich beispielsweise um einen Oxidationskatalysator, um ein Partikelfilter, um einen NOₓ-Speicherkatalysator oder um einen SCR-Katalysator oder um eine beliebige Kombination daraus handeln. Vorzugsweise handelt es sich um ein Partikelfilter 13. Zusätzlich oder optional kann die Abgasanlage 4 ein Abgasventil 14 aufweisen, das so ausgestaltet ist, dass damit ein durchströmbarer Querschnitt der Abgasanlage 4 beziehungsweise der Abgasleitung 11 steuerbar ist.

Die Abgasrückführanlage 5 dient dazu, der Abgasanlage 4 Abgas zu entnehmen und das entnommene Abgas in die Frischgasanlage 3 einzuleiten. Hierzu umfasst die Abgasrückführanlage 5 eine Abgasrückführleitung 15, die über eine Entnahmestelle 16 an die Abgasanlage 4 und über zumindest eine Einleitstelle 17, 18 an die Frischgasanlage 3 angeschlossen ist. In dem in Fig. 1 gezeigten, bevorzugten Beispiel sind zwei derartige Einleitstellen 17, 18 dargestellt. Bei einer anderen Ausführungsform kann eine einzige Einleitstelle 17, 18 ausreichen; bei anderen Ausführungsformen können auch mehr als zwei Einleitstellen 17, 18 vorgesehen sein. Die Abgasrückführanlage 5 kann einen Wärmeübertrager 19 aufweisen, mit dessen Hilfe das rückzuführende Abgas gekühlt werden kann. Hierzu ist der Wärmeübertrager 19, der auch als Abgasrückführkühler bezeichnet werden kann, an einen Kühlkreis 20 angeschlossen, bei dem es sich insbesondere ebenfalls um den Kühlkreis der Brennkraftmaschine 2 handeln kann. Zusätzlich oder optional kann die Abgasrückführanlage 5 ein Rückführventil 21 enthalten, das zweckmäßig so ausgestaltet ist, dass damit eine Rückströmung von Frischgas durch die Abgasrückführanlage 5 in die Abgasanlage 4 vermieden werden kann. Bei einer einfachen Ausführungform kann es sich beim Rückführventil 21 um ein passiv arbeitendes Rückschlagsperrventil handeln. Bei einer anderen Ausführungsform kann es sich um ein aktives beziehungsweise steuerbares Rückführventil 21 handeln, mit dessen Hilfe der durchströmbare Querschnitt der Abgasrückführanlage 5 bzw. der Rückführleitung 15 steuerbar ist.

Die Frischgasanlage 3 weist einen Steuerabschnitt 22 auf, in dem die Frischgasanlage 3 zumindest zwei parallel durchströmbare Frischgaspfade, nämlich einen ersten Frischgaspfad 23 und einen zweiten Frischgaspfad 24 aufweist. Grundsätzlich können auch mehr als zwei Frischgaspfade 23, 24 vorgesehen sein. Zumindest in zwei Frischgaspfaden 23, 24, vorzugsweise in jedem Frischgaspfad 23, 24 ist jeweils ein Frischgasventil angeordnet. Dementsprechend ist hier ein erstes Frischgasventil 25 im ersten Frischgaspfad 23 angeordnet, während im zweiten Frischgaspfad 24 ein zweites Frischgasventil 26 angeordnet ist. Jedes Frischgasventil 25, 26 ist so ausgestaltet, dass damit ein durchströmbarer Querschnitt des jeweiligen Frischgaspfads 23, 24 gesteuert werden kann. Beispielsweise kann jedes Frischgasventil 25, 26 eine Schließstellung und eine Offenstellung für den jeweiligen Frischgaspfad 23, 24 realisieren. In der Schließstellung ist der jeweilige Frischgaspfad 23, 24 gesperrt beziehungsweise mit einem minimalen durchströmbaren Querschnitt geöffnet, während der jeweilige Frischgaspfad 23, 24 in der Offenstellung des zugehörigen Frischgasventils 25, 26 voll geöffnet ist beziehungsweise seinen maximal durchströmbaren Querschnitt aufweist. Der Steuerabschnitt 22 ist in der Frischgasanlage 3 stromauf des Frischgasverteilers angeordnet, insbesondere ist der Steuerabschnitt 22 stromauf des Wärmeübertragers 9 in der Frischgasanlage 3 angeordnet.

Zur Betätigung der Frischgasventile 25, 26 ist zweckmäßig eine Ventilsteuerung 27 vorgesehen, die auf geeignete Weise mit den Frischgasventilen 25, 26 verbunden ist. Die Ventilsteuerung 27 kann außerdem mit dem Abgasventil 14 und/oder mit dem Rückführventil 21 verbunden sein, soweit diese Ventile steuerbar sind beziehungsweise vorhanden sind. Ferner kann die Ventilsteuerung 27 auf geeignete Weise mit der Brennkraftmaschine 2 beziehungsweise mit einer Motorsteuerung gekoppelt sein. Beispielsweise kann die Ventilsteuerung 27 in eine derartige Motorsteuerung integriert sein. Jedenfalls ist die Ventilsteuerung 27 so mit der Motorsteuerung gekoppelt, dass die Ventilsteuerung 27 den aktuellen Betriebszustand der Brennkraftmaschine 2 kennt beziehungsweise die vom aktuellen Betriebszustand der Brennkraftmaschine 2 abhängige Abgasrückführmenge kennt.

Antriebskraft für die Rückführung von Abgas von der Abgasanlage 4 zur Frischgasanlage 3 ist das Druckgefälle zwischen der Entnahmestelle 16 und der jeweiligen Einleitstelle 17, 18. Bei der gezeigten Ausführungsform mit aufgeladener Brennkraftmaschine 2 ist ein Hochdruck-Rückführsystem dargestellt, bei dem sich die Entnahmestelle 16 an der Hochdruckseite der Turbine 12 befindet, während sich die Einleitstellen 17, 18 auf der Hochdruckseite des Verdichters 7 befinden. Grundsätzlich sind auch Niederdruck-Hockdruck-Rückführsysteme denkbar, bei denen Abgas auf der Niederdruckseite der Turbine 12 entnommen und auf der Hochdruckseite des Verdichters 7 eingeleitet wird. Auch reine Niederdruck-Rückführsysteme sind denkbar. Je nach Betriebszustand der Brennkraftmaschine 2, der im wesentlichen durch die Parameter Last und Drehzahl bestimmt ist, kann der Druck im Frischgas stromab des Verdichters 7 ähnlich hoch sein wie im Abgas stromauf der Turbine 12. Um bei derartigen Betriebszuständen die jeweils gewünschte Abgasrückführmenge realisieren zu können, kann die Ventilsteuerung 27 die Frischgasventile 25, 26 zum Reduzieren des durchströmbaren Querschnitts ansteuern, wodurch es stromab der Frischgasventile 25, 26 zu einem Druckabfall kommt. Sofern die Einleitstellen 17, 18 wie hier stromab der Frischgasventile 25, 26 in der Frischgasanlage 3 angeordnet sind, führt die mit den Frischgasventilen 25, 26 erzeugbare Druckabsenkung zu einer Vergrößerung der Druckdifferenz zwischen der Entnahmestelle 16 und den Einleitstellen 17, 18, was die Rückführung der Abgase verbessert.

Bei den Erfindung ist vorgesehen, die Ventilsteuerung 27 so auszugestalten, dass sie die Frischgasventile 25, 26 zur Erzeugung von Druckschwingungen in der Frischgasanlage 3 ansteuert. Diese Druckschwingungen besitzen Schwingungsphasen mit relativ niedrigen Drücken, was die Erzeugung vergleichsweise großer Druckdifferenzen zwischen der Entnahmestelle 16 und den Einleitstellen 17, 18 ermöglicht. Dabei können die Frischgasventile 25, 26 grundsätzlich so angesteuert werden, dass Druckschwingungen, die in der Frischgasanlage 3 aufgrund von Ladungswechselvorgängen ohnehin entstehen, gezielt verstärkt werden.

Bei der hier gezeigten Ausführungsform sind die Einleitstellen 17, 18 beide stromab der Frischgasventile 25, 26 in der Frischgasanlage 3 angeordnet. Grundsätzlich ist es jedoch auch möglich, zumindest eine der Einleitstellen 17, 18 stromauf der Frischgasventile 25, 26 in der Frischgasanlage 3 anzuordnen. Sofern die Frischgasventile 25, 26 entsprechend dynamisch ansteuerbar sind, lassen sich Druckschwingungen im Frischgas auch stromauf der Frischgasventile 25, 26 erzeugen, die Schwingungsphasen mit vergleichsweise niedrigem Druck besitzen, der für eine Abgasrückführung ausreichend ist. Dementsprechend kann die in Fig. 2 durch Pfeile angedeutete Frischgasströmung 28 bei einer anderen Ausführungsform in entgegengesetzter Richtung orientiert sein.

Besonders vorteilhaft ist eine Ausführungsform, bei welcher die Frischgasventile 25, 26 dynamisch ansteuerbar ausgestaltet sind. Hierdurch ist es insbesondere möglich, die Frischgasventile 25, 26 in Abhängigkeit des sich dynamisch verändernden Betriebszustands der Brennkraftmaschine 2 zu betätigen, um so durch die dynamische Steuerung des Frischgasdrucks an den Einleitstellen 17, 18 die Abgasrückführrate beziehungsweise die Abgasrückführmenge an den sich dynamisch ändernden Bedarf anzupassen. Insbesondere können dadurch die Frischgasventile 25, 26 dynamisch in Abhängigkeit der Drehzahl und/oder der Last der Brennkraftmaschine 2 betätigt werden.

Die Frischgasventile 25, 26 sind als schnellschaltende Ventile ausgestaltet, die innerhalb relativ kurzer Schaltzeiten oder Steuerzeiten die gewünschten Veränderungen des durchströmbaren Querschnitts des jeweiligen Frischgaspfads 23, 24 der Frischgasanlage 3 realisieren. Beispielsweise können die Frischgasventile 25, 26 im Millisekundenbereich zwischen ihrer Schließstellung und ihrer Offenstellung verstellt werden. Insbesondere können die schnellschaltenden Frischgasventile 25, 26 im gleichen Frequenzbereich geschaltet werden, in dem auch die Ladungswechselvorgänge der Brennkraftmaschine 2 stattfinden. Hierdurch ist beispielsweise eine Synchronisation der Frischgasventile 25, 26 an Druckschwankungen im Frischgas anpassbar, die aufgrund der Ladungswechselvorgänge in der Frischgasanlage 3 ohnehin auftreten. Beispielsweise können dadurch positive und negative Druckamplituden in der schwingenden Frischgasströmung gezielt verstärkt werden.

Die Frischgasventile 25, 26 können als diskontinuierlich arbeitende Ventile ausgestaltet sein, bei denen ein Ventilglied, zum Beispiel eine Schmetterlingsklappe, mit entgegengesetzten Bewegungsrichtungen zumindest zwischen zwei vorbestimmten Steuerstellung umschaltbar ist. Ohne Beschränkung der Allgemeinheit kann ein derartiges diskontinuierlich arbeitendes Frischgasventil 25, 26 beispielsweise als Ventilglied eine um eine Drehachse verschwenkbare Klappe aufweisen, die zwischen einer Schließstellung und einer Offenstellung umschaltbar ist. Dabei dreht das jeweilige Ventilglied beim Schließen in der einen Drehrichtung und beim Öffnen in der anderen Drehrichtung. Des weiteren ist für ein diskontinuierlich arbeitendes Ventil kennzeichnend, dass das jeweilige Ventilglied in der jeweils eingestellten Steuerstellung für eine gewisse Zeit verbleibt, so dass das Ventilglied nur bei den zeitlich begrenzten, schnell ablaufenden Schaltvorgängen in Bewegung ist.

Alternativ kann es sich bei den Frischgasventilen 25, 26 um kontinuierlich arbeitende Ventile handeln, bei denen das jeweilige Ventilglied mit gleicher Bewegungsrichtung zumindest zwei verschiedene Steuerstellungen durchläuft. Ohne Beschränkung der Allgemeinheit kann ein derartiges kontinuierlich arbeitendes Frischgasventil 25, 26 beispielsweise eine Klappe oder einen Drehschieber als Ventilglied aufweisen, das um eine Drehachse rotierend antreibbar ist. Charakteristisch ist hierbei für das kontinuierlich arbeitende Frischgasventil 25, 26, dass das jeweilige Ventilglied im Betrieb des Ventils permanent mit der gleichen Rotationsrichtung dreht und dabei mit einer vorbestimmten Drehgeschwindigkeit zum Beispiel einen Schließwinkelbereich und einen Öffnungswinkelbereich durchfährt. Auch mit Hilfe derartiger kontinuierlich arbeitender Frischgasventile 25, 26 lassen sich extrem kurze Schaltzeiten erzielen, wobei jedoch permanent eine Querschnittsveränderung stattfinden kann und das jeweilige Ventilglied permanent in Bewegung ist. Durch Variation der Drehgeschwindigkeit lassen sich auch bei einem derartigen kontinuierlich arbeitenden Frischgasventil 25, 26 die Schaltzeiten einstellen.

Ein Verfahren zum Betreiben des Brennkraftmaschinensystems 1 kann wie folgt ablaufen:

Um unterschiedliche Abgasrückführmengen einzustellen, kann die Ventilsteuerung 27 die Frischgasventile 25, 26 zur Erzeugung von Druckschwingungen ansteuern, bei denen die Frequenz und/oder die Amplitude von der jeweils einzustellenden Abgasrückführmenge abhängt. Gemäß einer bevorzugten Ausführungsform kann die Ventilsteuerung 27 so ausgestaltet sein, dass sie bei einem Betriebszustand der Brennkraftmaschine 2, der sich durch einen Bereich kleinerer Lasten und/oder kleinerer Drehzahlen auszeichnet, das erste Frischgasventil 25 permanent in dessen Schließstellung verstellt hält, während sie das zweite Frischgasventil 26 zum Einstellen der jeweiligen Abgasrückführmenge ansteuert. In diesem Betriebszustand ist der erste Frischgaspfad 23 permanent gesperrt, während die Druckschwingungen nur im zweiten Frischgaspfad 24 erzeugt werden.

Zur Realisierung der jeweiligen Abgasrückführmenge bei einem Betriebszustand der Brennkraftmaschine 2, der sich durch einen Bereich mittlere Lasten und/oder mittlerer Drehzahlen auszeichnet, kann die Ventilsteuerung 27 zusätzlich oder alternativ so ausgestaltet sein, dass sie die beiden Frischgasventile 25, 26 synchron oder asynchron zum Einstellen der jeweiligen Abgasrückführmenge ansteuert.

Zusätzlich oder alternativ kann vorgesehen sein, dass die Ventilsteuerung 27 so ausgestaltet ist, dass sie bei einem Betriebszustand der Brennkraftmaschine 2, der sich durch einen Bereich größerer Lasten und/oder größerer Drehzahlen auszeichnet, eines der Frischgasventile 25, 26 permanent geöffnet hält, während sie das jeweils andere Frischgasventil 25, 26 zum Einstellen der jeweiligen Abgasrückführmenge ansteuert. Vorzugsweise sind somit die Frischgasventile 25, 26 mit Hilfe der Ventilsteuerung 27 unabhängig voneinander ansteuerbar, wodurch sich zusätzliche Möglichkeiten zum Einstellen der Abgasrückführmenge ergeben.

Entsprechend Fig. 2 kann der Steuerabschnitt 22 vorzugsweise in einem Ventilgehäuse 29 ausgebildet sein. In diesem Ventilgehäuse 29 sind die beiden parallel durchströmbaren Frischgaspfade 23 und 24 ausgebildet. Im Ventilgehäuse 29 sind die beiden Frischgasventile 25, 26 jeweils in einem der Frischgaspfade 23, 24 angeordnet. Das Ventilgehäuse 29 ist in die Frischgasleitung 6 eingebunden und bildet dadurch einen Bestandteil der Frischgasanlage 3. Exemplarisch ist eine der Einleitstellen 17, 18 am Ventilgehäuse 29 ausgebildet und somit direkt an einen der Frischgaspfade 23, 24 angeschlossen. Beispielsweise handelt es sich hierbei um die mit 17 bezeichnete Einleitstelle 17, die im Folgenden auch als erste Einleitstelle 17 bezeichnet wird. Die andere Einleitstelle 18, die im Folgenden auch als zweite Einleitstelle 18 bezeichnet wird, kann grundsätzlich ebenfalls am Ventilgehäuse 29 ausgebildet sein. Vorzugsweise ist die zweite Einleitstelle 18 jedoch an einer anderen Stelle an die Frischgasanlage 3 angeschlossen. In Fig. 2 sind zwei alternative Möglichkeiten zum Positionieren der zweiten Einleitstelle 18 wiedergegeben. Beispielsweise befindet sich die zweite Einleitstelle 18 unmittelbar stromab des Steuerabschnitts 22. Bei einer alternativen Ausführungsform kann sich die zweite Einleitstelle 18' beispielsweise etwas weiter stromab des Steuerabschnitts 22 befinden. Die Einleitstellen 17, 18 sind am Abgasstrang 3 unterschiedlich positioniert, derart, dass sich Betätigungen des ersten Frischgasventils 25 an der ersten Einleitstelle 17 anders auswirken als an der zweiten Einleitstelle 18, und dass sich Betätigungen des zweiten Frischgasventils 26 an der ersten Einleitstelle 17 anders auswirken als an der zweiten Einleitstelle 18. Beispielsweise können die Einleitstellen 17, 18 so positioniert sein, dass Druckschwingungen, die mit dem ersten Frischgasventil 25 erzeugt werden können, durch die erste Einleitstelle 17 eine größere Abgasrückführmenge erzeugen als durch die zweite Einleitstelle 18, 18'. Des weiteren können Druckschwingungen, die sich mit dem zweiten Frischgasventil 26 erzeugen lassen, durch die zweite Einleitstelle 18, 18' eine größere Abgasrückführmenge erzeugen als durch die erste Einleitstelle 17. Eine derartige Ausführungsform beruht auf der Erkenntnis, dass sich Druckschwingungen in Abhängigkeit von der Position der Einleitstelle 17, 18 unterschiedlich auf die Abgasrückführmenge, die durch die jeweilige Einleitstelle 17, 18 realisierbar ist, auswirken. Durch eine gezielte Auswahl der Positionierung für die Einleitstellen 17, 18 ergeben sich somit vielfältige Einstellmöglichkeiten für die Abgasrückführmenge. Insbesondere ist es dadurch möglich, die Einleitstellen 17, 18 so anzuordnen beziehungsweise zu positionieren, dass bei einem stationären oder konstanten Betrieb der Brennkraftmaschine 2 eine Abgasrückführmenge, die zum Beispiel durch die erste Einleitstelle 17 mit Hilfe von Druckschwingungen, die durch Betätigen des ersten Frischgasventils 25 erzeugt werden, einleitbar ist, kleiner ist als eine Abgasrückführmenge, die aufgrund von Druckschwingungen, die mit dem zweiten Frischgasventil 26 erzeugt werden, durch die zweite Einleitstelle 18 einleitbar ist. Zur Realisierung dieser unterschiedlichen Abgasrückführmengen beziehungsweise zur Verstärkung dieses Effekts kann vorgesehen sein, die Einleitstellen 17, 18 hinsichtlich der durch sie in die Frischgasanlage 3 einleitbaren Abgasrückführmengen unterschiedlich auszugestalten. Beispielsweise können die Einleitstellen 17, 18 wie in Fig. 2 exemplarisch dargestellt, unterschiedliche Strömungsquerschnitte aufweisen. Zusätzlich oder alternativ kann vorgesehen sein, die durchströmbaren Querschnitte der beiden Frischgaspfade 23, 24 unterschiedlich auszugestalten.

Durch die gezielte Positionierung der Einleitstellen 17, 18 ist eine gewissen Zuordnung der Frischgasventile 25, 26 zu den Einleitstellen 17, 18 realisierbar. Bei einer entsprechenden Ausgestaltung der Ventilsteuerung 27 lassen sich somit unterschiedliche Abgasrückführmengen durch unterschiedliche Ansteuerung der Frischgasventile 25, 26 einstellen. Beispielsweise kann zum Einstellen eines Bereichs kleiner Abgasrückführmengen vorgesehen sein, das zweite Frischgasventil 26 zum Erzeugen von Druckschwingungen anzusteuern und das erste Frischgasventil 25 permanent in der Schließstellung oder in der Offenstellung oder in einer anderen Stellung verstellt zu halten. Die stationäre Stellung des ersten Frischgasventils 25 kann dabei vom aktuellen Betriebszustand der Brennkraftmaschine 2 abhängen. Zum Einstellen eines Bereichs mit mittleren Abgasrückführmengen kann nun das zweite Frischgasventil 26 permanent in der Schließstellung oder in der Offenstellung oder in einer anderen Stellung verstellt gehalten werden, während das erste Frischgasventil 25 zum Erzeugen der Druckschwingungen angesteuert wird. Auch hier kann die jeweilige stationäre Stellung des zweiten Frischgasventils 26 vom aktuellen Betriebszustand der Brennkraftmaschine 2 abhängen. Zur Realisierung eines Bereichs großer Abgasrückführmengen kann nun vorgesehen sein, beide Frischgasventile 25, 26 synchron oder asynchron zum Erzeugen der Druckschwingungen anzusteuern.

Im vorliegenden Zusammenhang bedeuten die Begriffe "klein", "mittel" und "groß" keine absoluten Größen für die Abgasrückführmenge beziehungsweise für die Last und/oder Drehzahl der Brennkraftmaschine 2, sondern lediglich relative Größen. Das bedeutet, dass lediglich zum Ausdruck gebracht werden soll, dass kleine Abgasrückführmengen, kleine Lasten und kleine Drehzahlen kleiner sind als mittlere Abgasrückführmengen, mittlere Lasten und mittlere Drehzahlen, während große Abgasrückführmengen, große Lasten und große Drehzahlen größer sind als mittlere Abgasrückführmengen, mittlere Lasten und mittlere Drehzahlen. Beispielsweise liegen bei einem Gesamtbereich, dessen Minimalwert bei 0% und dessen Maximalwert bei 100% liegt, kleine Werte in einem Teilbereich von etwa 0% bis 50% des Gesamtbereichs, mittlere Werte in einem Teilbereich von etwa 25% bis 75% des Gesamtbereichs und große Werte in einem Teilbereich von etwa 50% bis 100% des Gesamtbereichs.

Grundsätzlich kann die Ventilsteuerung 27 das Abgasventil 14 gezielt so ansteuern, dass sich in der Abgasanlage 4 im Bereich der Entnahmestelle 16, die sich vorzugsweise zwischen der Komponente 13 und dem Abgasventil 14 befindet, eine Druckerhöhung einstellt. Insbesondere kann das Abgasventil 14 so angesteuert werden, dass damit impulsartige Druckstöße mit vorbestimmter Frequenz in der Abgasrückführanlage 5 erzeugt werden. Diese Druckimpulse lassen sich gezielt so ausgestalten, dass damit eine vorbestimmte Abgasrückführmenge realisierbar ist. Zusätzlich oder alternativ kann auch das Rückführventil 21 dazu genutzt werden, die vom Abgasventil 14 erzeugten Druckimpulse zu verstärken oder derartige Druckimpulse zu erzeugen, falls das Abgasventil 14 nicht zur Erzeugung von Druckimpulsen angesteuert wird. Ebenso kann das steuerbare Rückführventil 21 so angesteuert werden, dass eine Fehlströmung von Frischgas über die Rückführanlage 5 in die Abgasanlage 4 verhindert wird. Des weiteren ist es insbesondere möglich, das steuerbare, also aktive Rückführventil 21 zum Steuern der mit Hilfe des Abgasventils 14 erzeugten Druckimpulse zu betätigen, beispielsweise um Druckimpulse ganz oder nur teilweise durchzulassen. Im Unterschied zu einem passiv arbeitenden Rückschlagsperrventil kann das ansteuerbare Rückführventil 21 einen deutlich größeren durchströmbaren Querschnitt steuern, was die Strömungswiderstände entsprechend reduziert.

## Patentansprüche

1. Brennkraftmaschinensystem, insbesondere in einem Kraftfahrzeug,
- mit einer Brennkraftmaschine (2),
- mit einer Frischgasanlage (3) zum Zuführen von Frischgas zur Brennkraftmaschine (2),
- mit einer Abgasanlage (4) zum Abführen von Abgas von der Brennkraftmaschine (2),
- mit einer Abgasrückführanlage (5) zum Entnehmen von Abgas aus der Abgasanlage (4) und zum Einleiten des entnommenen Abgases in die Frischgasanlage (3),
- wobei zumindest in einem Steuerabschnitt (22) der Frischgasanlage (3) zumindest zwei parallel durchströmbare Frischgaspfade (23, 24) ausgebildet sind,
- wobei in wenigstens zwei solchen Frischgaspfaden (23, 24) jeweils ein Frischgasventil (25, 26) zum Steuern des durchströmbaren Querschnitts des jeweiligen Frischgaspfads, insbesondere zum Steuern einer Abgasrückführrate der Abgasrückführanlage (5), angeordnet ist,
**dadurch gekennzeichnet,**
- **dass** die Frischgasventile (25, 26) als schnellschaltende Ventile ausgestaltet sind,
- **dass** eine Ventilsteuerung (27) zur Betätigung der Frischgasventile (25, 26) vorgesehen ist, die so ausgestaltet ist, dass sie im Betrieb der Brennkraftmaschine (2) zum Einstellen einer vom aktuellen Betriebszustand der Brennkraftmaschine (2) abhängigen Abgasrückführmenge die Frischgasventile (25, 26) zur Erzeugung von Druckschwingungen in der Frischgäsanlage (3) ansteuert, die hinsichtlich Frequenz und/oder Amplitude von der einzustellenden Abgasrückführmenge abhängen.

2. Brennkraftmaschinensystem nach Anspruch 1,
**dadurch gekennzeichnet,**
- **dass** die Ventilsteuerung (27) so ausgestaltet ist, dass sie bei einem Betriebszustand der Brennkraftmaschine (2) mit kleiner Last und/oder kleiner Drehzahl das wenigstens eine Frischgasventil (25) permanent in dessen Schließstellung verstellt hält und das wenigstens eine andere Frischgasventil (26) zum Einstellen der jeweiligen Abgasrückführmenge ansteuert, und/oder
- **dass** die Ventilsteuerung (27) so ausgestaltet ist, dass sie bei einem Betriebszustand der Brennkraftmaschine (2) mit mittlerer Last und/oder mittlerer Drehzahl die wenigstens zwei Frischgasventile (25, 26) zum Einstellen der jeweiligen Abgasrückführmenge synchron oder asynchron ansteuert, und/oder
- **dass** die Ventilsteuerung (27) so ausgestaltet ist, dass sie bei einem Betriebszustand der Brennkraftmaschine (2) mit großer Last und/oder großer Drehzahl das wenigstens eine Frischgasventil (25, 26) permanent in dessen Offenstellung verstellt hält und das wenigstens eine andere Frischgasventil (25, 26) zum Einstellen der jeweiligen Abgasrückführmenge ansteuert.

3. Brennkraftmaschinensystem nach Anspruch 1 oder 2, **dadurch gekennzeichnet,**
- **dass** die Abgasrückführanlage (5) über wenigstens zwei verschiedene Einleitstellen (17, 18) an die Frischgasanlage (3) angeschlossen ist,
- **dass** die Einleitstellen (17, 18) so positioniert sind, dass mit dem wenigstens einen Frischgasventil (25) erzeugbare Druckschwingungen durch die wenigstens eine Einleitstelle (17) eine größere Abgasrückführmenge erzeugen als durch die wenigstens eine andere Einleitstelle (18), während mit dem wenigstens einen anderen Frischgasventil (26) erzeugbare Druckschwingungen durch die wenigstens eine andere Einleitstelle (18) eine größere Abgasrückführmenge erzeugen als durch die wenigstens eine Einleitstelle (17).

4. Brennkraftmaschinensystem nach Anspruch 3,
**dadurch gekennzeichnet,**
**dass** die Einleitstellen (17, 18) so positioniert sind, dass bei gleichem Betriebszustand der Brennkraftmaschine (2) die Abgasrückführmenge, die aufgrund von mit dem wenigstens einen Frischgasventil (25) erzeugbaren Druckschwingungen durch die wenigstens eine Einleitstelle (17) einleitbar ist, kleiner ist als die Abgasrückführmenge, die aufgrund von mit dem wenigstens einen anderen Frischgasventil (26) erzeugbaren Druckschwingungen durch die wenigstens eine andere Einleitstelle (18) einleitbar ist.

5. Brennkraftmaschinensystem nach Anspruch 3 oder 4, **dadurch gekennzeichnet,**
- **dass** die Ventilsteuerung (27) so ausgestaltet ist, dass sie zum Einstellen einer kleinen Abgasrückführmenge das wenigstens eine Frischgasventil (26) zum Erzeugen von Druckschwingungen ansteuert und das andere Frischgasventil (25) permanent in der Schließstellung oder in der Offenstellung oder in einer anderen Stellung verstellt hält, und/oder
- **dass** die Ventilsteuerung (27) so ausgestaltet ist, dass sie zum Einstellen einer mittleren Abgasrückführmenge das wenigstens eine Frischgasventil (26) permanent in der Schließstellung oder in der Offenstellung oder in einer anderen Stellung verstellt hält und das wenigstens eine andere Frischgasventil (25) zum Erzeugen von Druckschwingungen ansteuert, und/oder
- **dass** die Ventilsteuerung (27) so ausgestaltet ist, dass sie zum Einstellen einer großen Abgasrückführmenge die wenigstens zwei Frischgasventile (25, 26) synchron oder asynchron zum Erzeugen von Druckschwingungen ansteuert.

6. Brennkraftmaschinensystem nach einem der Ansprüche 3 bis 5,
**dadurch gekennzeichnet,**
**dass** die wenigstens zwei Einleitstellen (17, 18) hinsichtlich der durch sie in die Frischgäsanlage (3) einleitbaren Abgasrückführmengen unterschiedlich ausgestaltet sind.

7. Brennkraftmaschinensystem nach einem der Ansprüche 1 bis 6,
**dadurch gekennzeichnet,**
**dass** der Steuerabschnitt (22) in einem Ventilgehäuse (29) ausgebildet ist, das die Frischgaspfade (23, 24) mit den Frischgasventilen (25, 26) enthält.

8. Brennkraftmaschinensystem nach einem der Ansprüche 1 bis 7,
**dadurch gekennzeichnet,**
- **dass** zumindest eine Einleitstelle (17, 18) über die die Abgasrückführanlage (5) an die Frischgasanlage (3) angeschlossen ist, stromab des jeweiligen Frischgasventils (25, 26) in der Frischgasanlage (3) angeordnet ist, und/oder
- **dass** zumindest eine Einleitstelle (17, 18) über die die Abgasrückführanlage (5) an die Frischgasanlage (3) angeschlossen ist, stromauf des jeweiligen Frischgasventils (25, 26) in der Frischgasanlage (3) angeordnet ist.

9. Brennkraftmaschinensystem nach einem der Ansprüche 1 bis 8,
**dadurch gekennzeichnet,**
**dass** die wenigstens zwei Frischgaspfade (23, 24) hinsichtlich des durchströmbaren Querschnitts unterschiedlich ausgestaltet sind.

10. Brennkraftmaschinensystem nach einem der Ansprüche 1 bis 9,
**dadurch gekennzeichnet,**
- **dass** die Frischgasventile (25, 26) dynamisch ansteuerbar sind, und/oder
- **dass** die Frischgasventile (25, 26) als diskontinuierlich arbeitende Ventile, dessen jeweiliges Ventilglied mit entgegengesetzten Bewegungsrichtungen zumindest zwischen zwei vorbestimmten Steuerstellungen umschaltbar ist, oder als kontinuierlich arbeitende Ventile ausgestaltet sind, dessen jeweiliges Ventilglied mit gleicher Bewegungsrichtung zumindest zwei verschiedene Steuerstellungen durchläuft.

## Claims

1. An internal combustion engine system, in particular in a motor vehicle,
- with a an internal combustion engine (2),
- with a make-up gas installation (3) for supplying make-up gas to the internal combustion engine (2),
- with an exhaust gas installation (4) for evacuating the exhaust gas from the internal combustion engine (2),
- with a an exhaust gas recirculation installation (5) for extracting exhaust gas from the exhaust gas installation (4) and introducing the extracted exhaust gas into the make-up gas installation (3),
- wherein at least two make-up gas paths (23, 24) through which gas can flow in parallel are formed in a control section (22) of the make-up gas installation (3),
- wherein a make-up gas valve (25, 26) for controlling the cross section through which gas can flow of the respective make-up gas path, in particular to control an exhaust gas recirculation rate of the exhaust gas recirculation installation (5), is arranged in at least two such make-up gas paths (23, 24).
**characterised in that**
- the make-up gas valves (25, 26) are designed as fast switching valves,
- a valve control (27) is provided for actuating the make-up gas valves (25, 26), said valve control being designed in such a manner that it drives during operation of the internal combustion engine (2) the make-up gas valves (25, 26) to generate pressure fluctuations in the make-up gas installation (3), said pressure fluctuations with regard to frequency and/or amplitude being a function of the exhaust gas recirculation amount to be adjusted, so as to adjust an exhaust gas recirculation amount as a function of the current operational state of the internal combustion engine (2).

2. The internal combustion engine system as specified in claim 1,
**characterised in that**
- the valve control (27) is designed in such a manner that, during an operational state of the internal combustion engine (2) with small load and/or small engine speed, it holds the at least one make-up gas valve (25) permanently misaligned in its closed position and drives the at least one other make-up gas valve (26) to adjust the respective exhaust gas recirculation amount, and/or
- the valve control (27) is designed in such a manner that, during an operational state of the internal combustion engine (2) with median load and/or median engine speed, it drives the at least two make-up gas valves (25, 26) synchronously or asynchronously to adjust the respective exhaust gas recirculation amounts, and/or
- the valve control (27) is designed in such a manner that, during an operational state of the internal combustion engine (2) with large load and/or large engine speed, it holds the at least one make-up gas valve (25, 26) permanently misaligned in its open position and drives the at least one other make-up gas valve (25, 26) to adjust the respective exhaust gas recirculation amount.

3. The internal combustion engine system as specified in claim 1 or claim 2,
**characterised in that**
- the exhaust gas recirculation installation (5) is connected to the make-up gas installation (3) by means of at least two different introduction locations (17, 18),
- the introduction locations (17, 18) are positioned in such a manner that a greater exhaust gas recirculation amount is generated with the pressure fluctuations that can be generated by the at least one make-up gas valve (25) by means of the at least one introduction location (17) than by means of the least one other make-up gas valve (26), while a greater exhaust gas recirculation amount is generated with the pressure fluctuations that can be generated by the at least other make-up gas valve (26) by means of the at least one other introduction location (18) than can be generated by means of the at least one introduction location (17).

4. The internal combustion engine system as specified in claim 3,
**characterised in that**
the introduction locations (17, 18) are positioned in such a manner that with the identical operational state of the internal combustion engine (2), the exhaust gas recirculation amount, which can be conducted through the at least one introduction location (17) owing to the pressure fluctuations that can be generated by the at least one make-up gas valve (25), is smaller than the exhaust gas recirculation amount, which can be conducted through the at least one other introduction location (18) owing to the pressure fluctuations that can be generated by the at least one other make-up gas valve (26).

5. The internal combustion engine system as specified in one of claims 3 or 4,
**characterised in that**
- the valve control (27) is designed in such a manner that it drives the at least one make-up gas valve (26) to generate pressure fluctuations and said valve control furthermore holds the other make-up gas valve (25) permanently misaligned in its closed position or in its open position or in another position and/or
- the valve control (27) is designed in such a manner that it holds the at least one make-up gas valve (26) permanently misaligned in the closed position or in the open position or in another position in order to adjust a median exhaust gas recirculation amount and said valve control furthermore drives the at least one other make-up gas valve (25) to generate pressure fluctuations, and/or
- the valve control (27) is designed in such a manner that in order to adjust a large exhaust gas recirculation amount, it drives the at least two make-up gas valves (25, 26) synchronously or asynchronously to generate pressure fluctuations.

6. The internal combustion engine system as specified in any one of claims 3 to 5,
**characterised in that**
the at least two introduction locations (17, 18) are designed differently with respect to exhaust gas recirculation amounts that can be guided therethrough into the make-up gas installation (3).

7. The internal combustion engine system as specified in any one of claims 1 to 6,
**characterised in that**
the control section (22) is designed in a valve housing (29) that contains the make-up gas paths (23, 24) with the make-up gas valves (25, 26).

8. The internal combustion engine system as specified in any one of claims 1 to 7,
**characterised in that**
- the exhaust gas recirculation installation (5) is connected to make-up gas installation (3) by means of at least one introduction location (17, 18), said introduction location being arranged downstream from the respective make-up gas valve (25, 26) in the make-up gas installation (3) and/or
- the exhaust gas recirculation installation (5) is connected to make-up gas installation (3) by means of at least one introduction location (17, 18), said introduction location being arranged upstream from the respective make-up gas valve (25, 26) in the make-up gas installation (3).

9. The internal combustion engine system as specified in any one of claims 1 to 8,
**characterised in that**
the at least two make-up gas paths (23, 24) are designed differently with regard to the cross section through which gas can flow.

10. The internal combustion engine system as specified in any one of claims 1 to 9,
**characterised in that**
- the make-up gas valves (25, 26) can be driven dynamically and/or
- the make-up gas valves (25, 26) are designed as discontinuously working valves the respective valve member of which having opposing direction of motion is switchable at least between two predetermined control positions or said make-up gas valves are designed as continuously working valves the respective valve member of which with the identical direction of motion moves through at least two different control positions.

## Revendications

1. Système de moteur à combustion interne, notamment dans un véhicule automobile,
- comportant un moteur à combustion interne (2),
- comportant une installation de gaz frais (3) pour introduire du gaz frais dans le moteur à combustion interne (2),
- comportant une installation de gaz d'échappement (4) pour évacuer le gaz d'échappement du moteur à combustion interne (2),
- comportant une installation de réintroduction de gaz d'échappement (5) pour prélever le gaz d'échappement hors de l'installation de gaz d'échappement (4) et pour déverser le gaz d'échappement prélevé dans l'installation de gaz frais (3),
- dans lequel au moins dans une portion de commande (22) de l'installation de gaz frais (3) au moins deux chemins de gaz frais (23, 24) pouvant être traversés en parallèle sont réalisés,
- dans lequel dans au moins deux tels chemins de gaz frais (23, 24) une soupape de gaz frais respective (25, 26) pour commander la section transversale pouvant être traversée du chemin de gaz frais respectif, notamment pour commander un taux de réintroduction de gaz d'échappement de l'installation de réintroduction de gaz d'échappement (5), est disposée,
**caractérisé en ce que**
- les soupapes de gaz frais (25, 26) sont réalisées comme des soupapes à commutation rapide,
- une unité de commande de soupape (27) pour actionner les soupapes de gaz frais (25, 26) est prévue, qui est conçue de telle sorte que lors du fonctionnement du moteur à combustion interne (2) pour régler une quantité de réintroduction de gaz d'échappement dépendant de l'état de fonctionnement actuel du moteur à combustion interne (2), elle commande les soupapes de gaz frais (25, 26) pour produire des pulsations de pression dans l'installation de gaz frais (3), lesquelles dépendant en ce qui concerne leur fréquence et/ou amplitude de la quantité de réintroduction de gaz d'échappement à régler.

2. Système de moteur à combustion interne selon la revendication 1,
**caractérisé en ce que**
- l'unité de commande de soupape (27) est conçue de sorte que, lors d'un état de fonctionnement du moteur à combustion interne (2) avec une petite charge et/ou une petite vitesse de rotation, elle maintienne réglée en permanence au moins une soupape de gaz frais (25) dans la position de fermeture de celle-ci et elle commande au moins une autre soupape de gaz frais (26) pour régler la quantité de réintroduction de gaz d'échappement respective, et/ou
- l'unité de commande de soupape (27) est conçue de sorte que, lors d'un état de fonctionnement du moteur à combustion interne (2) avec une charge moyenne et/ou une vitesse de rotation moyenne, elle commande de manière synchrone ou asynchrone au moins deux soupapes de gaz frais (25, 26) afin de régler la quantité de réintroduction de gaz d'échappement respective, et/ou
- l'unité de commande de soupape (27) est conçue de telle sorte que, lots d'un état de fonctionnement du moteur à combustion interne (2) avec une grande charge et/ou une grande vitesse de rotation, elle maintienne réglée en permanence au moins une soupape de gaz frais (25, 26) dans la position d'ouverture de celle-ci et elle commande au moins une autre soupape de gaz frais (25, 26) pour régler la quantité de réintroduction de gaz d'échappement respective.

3. Système de moteur à combustion interne selon la revendication 1 ou 2,
**caractérisé en ce que**
- l'installation de réintroduction de gaz d'échappement (5) est raccordée par l'intermédiaire d'au moins deux points de déversement différents (17, 18) à l'installation de gaz frais (3),
- les points de déversement (17, 18) sont positionnés de sorte les pulsations de pression produites par au moins une soupape de gaz frais (25) produisent à travers au moins un point de déversement (17) une plus grande quantité de réintroduction de gaz d'échappement que à travers au moins un autre point de déversement (18), alors que les pulsations de pression pouvant être produites par au moins une autre soupape de gaz frais (26) produisent à travers au moins un autre point de déversement (18) une plus grande quantité de réintroduction de gaz d'échappement que à travers au moins un point de déversement (17).

4. Système de moteur à combustion interne selon la revendication 3,
**caractérisé en ce que**
les points de déversement (17, 18) sont positionnés de sorte que dans le même état de fonctionnement du moteur à combustion interne (2) la quantité de réintroduction de gaz d'échappement, qui peut être déversée en raison des pulsations de pression pouvant être produites par au moins une soupape de gaz frais (25) à travers au moins un point de déversement (17) , est plus petite que le quantité de réintroduction de gaz d'échappement, qui peut être déversée en raison des pulsations de pression pouvant être produites par au moins une autre soupape de gaz frais (26) à travers au moins un autre point de déversement (18).

5. Système de moteur à combustion interne selon la revendication 3 ou 4,
**caractérisé en ce que**
- l'unité de commande de soupape (27) est conçue de sorte que pour régler une petite quantité de réintroduction de gaz d'échappement, elle commande au moins une soupape de gaz frais (26) pour produire des pulsations de pression et elle maintienne réglée en permanence l'autre soupape de gaz frais (25) en permanence dans la position de fermeture ou dans la position d'ouverture ou dans une autre position, et/ou
- l'unité de commande de soupape (27) est conçue de sorte que pour régler une quantité de réintroduction de gaz d'échappement moyenne, elle maintienne réglée au moins une soupape de gaz frais (26) en permanence dans la position de fermeture ou dans la position d'ouverture ou dans une autre position et elle commande au moins une autre soupape de gaz frais (25) pour produire des pulsations de pression, et/ou
- l'unité de commande de soupape (27) est conçue de sorte que pour régler une grande quantité de réintroduction de gaz d'échappement, elle commande au moins deux soupapes de gaz frais (25, 26) de manière synchrone ou asynchrone pour produire des pulsations de pression.

6. Système de moteur à combustion interne selon une des revendications 3 à 5,
**caractérisé en ce que**
les au moins deux points de déversement (17, 18) sont conçus différemment en ce qui concerne les quantités de réintroduction de gaz d'échappement pouvant être déversées à travers ceux-ci dans l'installation de gaz frais (3).

7. Système de moteur de à combustion interne selon une des revendications 1 à 6,
**caractérisé en ce que**
la portion de commande (22) est réalisée dans un logement de soupape (29), qui contient les chemins de gaz frais (23, 24) avec les soupapes de gaz frais (25, 26).

8. Système de moteur à combustion interne selon une des revendications 1 à 7,
**caractérisé en ce que**
- au moins un point de déversement (17, 18) par l'intermédiaire duquel l'installation de réintroduction de gaz d'échappement (5) est raccordée à l'installation de gaz frais (3), est disposé en aval de la soupape de gaz frais respective (25, 26) dans l'installation de gaz frais (3), et/ou
- au moins un point de déversement (17, 18) par l'intermédiaire duquel l'installation de réintroduction de gaz d'échappement (5) est raccordée à l'installation de gaz frais (3), est disposé en amont de la soupape de gaz frais respective (25, 26) dans l'installation de gaz frais (3).

9. Système de moteur à combustion interne selon une des revendications 1 à 8,
**caractérisé en ce que**
au moins deux chemins de gaz frais (23, 24) sont conçus différemment en ce qui concerne la section transversale pouvant être traversée.

10. Système de moteur à combustion interne selon une des revendications 1 à 9,
**caractérisé en ce que**
- les soupapes de gaz frais (25, 26) peuvent être commandées dynamiquement, et/ou
- les soupapes de gaz frais (25, 26) sont conçues comme des soupapes fonctionnant de manière discontinue, dont l'organe de soupape respectif peut être commuté avec des directions de mouvement opposées au moins entre deux positions de commande prédéterminées, ou comme des soupapes fonctionnant de manière continue, dont l'organe de soupape respectif passe avec une même direction de mouvement dans au moins deux positions de commande différentes.
